# EUROPÄISCHE PATENTANMELDUNG

(11) **EP 4 389 506 A1**
(43) Veröffentlichungstag der Anmeldung: **26.06.2024**
(21) Anmeldenummer: 23217248.6
(22) Anmeldetag: 15.12.2023
(51) Int. Cl.: B60L 53/35, B60L 53/12, B60L 53/16, B60L 53/37

(54) **LADESTATION**

(30) Priorität: 23.12.2022 DE 102022214392
(71) Anmelder: Continental Autonomous Mobility Germany GmbH, 85057 Ingolstadt (DE)
(72) Erfinder: Heise, Andreas, 60488 Frankfurt am Main (DE)
(74) Vertreter: Continental Corporation

(57) **Zusammenfassung**

Elektrisches Gerät (G) zum Laden von Elektrofahrzeugen, wobei das Gerät wenigstens einen ersten (1) und einen zweiten (2), jeweils im Wesentlichen scheibenförmig ausgebildeten, Körper aufweist, insbesondere welche im Wesentlichen parallel zu einem Untergrund (9) ausgerichtet sind, wobei der erste Körper (1) drehbar gelagert ist und rotatorisch angetrieben wird/ antreibbar ist, wobei der zweiter Körper (2) exzentrisch mit dem ersten Körper verbunden ist und relativ zum ersten Körper (1) drehbar gelagert ist und rotatorisch angetrieben wird/ antreibbar ist, wobei mit dem zweiten Körper eine Ladeeinheit (4) verbunden ist, welche im Wesentlichen senkrecht zur Grundfläche des ersten (1) und zweiten (2) Körpers auslenkbar ausgebildet ist und insbesondere eine elektrische oder induktive Kopplungseinheit (5) aufweist.

## Beschreibung

Die Erfindung betriff ein elektrisches Gerät zum Laden von Elektrofahrzeugen gemäß Oberbegriff von Anspruch 1.

Der Erfindung liegt die Aufgabe zu Grunde, ein elektrisches Gerät zum Laden von Elektrofahrzeugen vorzuschlagen, welches besonders robust und/oder besonders flach bauend ausgebildet ist und/oder eine präzise Positionierung einer Ladeeinheit relativ zu einem Fahrzeug ermöglicht, ohne dass das elektrische Gerät dazu selbst bewegt werden muss und/oder relativ kostengünstig ausgebildet werden kann.

Diese Aufgabe wird erfindungsgemäß gelöst durch das elektrische Gerät gemäß Anspruch 1.

Das elektrische Gerät weist insbesondere den Vorteil auf, dass es relativ leicht und sicher überfahrbar ist von dem Fahrzeug, da das elektrische Gerät relativ flach ausgebildet ist und relativ robust ist. Die Robustheit wird insbesondere durch die Ausbildung mittels der scheibenförmigen Körper, welche besonders bevorzugt jeweils nur rotatorisch auslenkbar sind, erreicht.

Das elektrische Gerät weist bevorzugt zumindest einen Elektromotor auf, mit welchem der erste und/oder der zweite Körper rotatorisch angetrieben bzw. ausgelenkt bzw. verdreht werden, insbesondere wird der Elektromotor von einer elektronischen Kontrolleinheit ECU angesteuert und verfährt den ersten und/oder zweiten Körper zu einem von der ECU vorgegebenen jeweiligen Drehwinkel und besonders bevorzugt zu einem kombinierten Drehwinkel des ersten und zweiten Körpers.

Es ist bevorzugt, dass die zweite Scheibe gegenüber der ersten Scheibe zumindest eine umlaufend ausgebildete Dichtung und/oder Dichtlippe aufweist.

Es ist zweckmäßig, dass die Kopplungseinheit als elektrisch kontaktierbarer Stecker oder Steckdose ausgebildet ist, insbesondere als koaxialer Stecker oder Steckdose.

Das elektrische Gerät weist vorzugsweise eine Sensoreinheit auf, insbesondere als Kameraeinheit ausgebildet, welche senkrecht oder schräg zur Grundfläche des ersten und zweiten Körpers, insbesondere ausgehend vom Untergrund, im Wesentlichen nach oben gerichtet ist und eine elektrische oder induktive Fahrzeug-Koppelungseinheit, insbesondere einen Stecker oder eine Steckdose, eines Elektrofahrzeugs erfassen kann, wonach in der elektronischen Kontrolleinheit ECU ein erster Drehwinkel des ersten Körpers und ein zweiter Drehwinkel des zweiten Körpers berechnet wird, damit die Kopplungseinheit der Ladeeinheit im Wesentlichen unter der Fahrzeug-Koppelungseinheit, insbesondere fluchtend, ausgerichtet wird, wonach die Ladeeinheit angetrieben von dem Elektromotor oder einem weiteren Elektromotor oder einer pneumatischen oder hydraulischen Antriebseinheit ausgelenkt wird und die elektrische oder induktive Kopplungseinheit der Ladeeinheit in die Fahrzeug-Kopplungseinheit, insbesondere ausgebildet als Stecker oder Steckdose, eingesteckt und/oder eingepasst wird oder in einem definierten Abstand positioniert wird.

Bevorzugt weist das elektrische Gerät einen dritten, im Wesentlichen scheibenförmig ausgebildeten, Körper auf, welcher exzentrisch mit dem zweiten Körper verbunden ist und relativ zum zweiten Körper drehbar gelagert ist und rotatorisch angetrieben wird/ antreibbar ist, wobei die Ladeeinheit mit dem dritten Körper anstatt dem zweiten Körper verbunden ist.

Es ist zweckmäßig, dass die Ladeeinheit einen Balg und/oder ein Teleskop aufweist, wobei der Balg die Ladeeinheit zumindest teilweise schützt bzw. abdichtet.

Insbesondere ist die Ladeeinheit als Teleskop bzw. Teleskoparm ausgebildet bzw. weist mindestens ein Teleskoprohr auf, insbesondere abgedichtet.

Die Ladeeinheit ist bevorzugt im Wesentlichen zentrisch mit dem zweiten oder dritten Körper verbunden, insbesondere auf dem zweiten oder dritten Körper im Wesentlichen zentrisch angeordnet.

Das elektrische Gerät steht vorzugsweise auf dem Untergrund bzw. dem Boden, auf welchem auch das Fahrzeug steht.

Unter dem Begriff Scheibe wird vorzugsweise ein scheibenförmiger Körper und/oder ein Körper verstanden und/oder umgekehrt.

Unter einem Fahrzeug wird bevorzugt ein Elektrofahrzeug verstanden und umgekehrt.

Zweckmäßigerweise wird unter dem Begriff Laden auch oder alternativ bidirektionales Laden bzw. eine Abgabe bzw. eine Aufnahme elektrischer Energie mittels des elektrischen Geräts hinsichtlich der Batterie bzw. des Akkus des Elektrofahrzeugs verstanden.

Elektrisches Gerät weist vorzugsweise eine drahtlose Sende-/ Empfangseinheit auf, welche zur Übertragung von Daten von/ zum Fahrzeug ausgebildet ist.

Die scheibenförmigen Körper sind bevorzugt im Wesentlichen rund, insbesondere kreisrund hinsichtlich ihres Umfangs ausgebildet und besonders bevorzugt flach, und weisen dabei also eine deutlich geringere Höhe auf, als ihr Radius.

Zweckmäßigerweise ist der zweite Körper in dem ersten Körper, insbesondere bündig eingelassen.

Es ist bevorzugt, dass die elektrische Kopplungseinheit der Ladeeinheit des elektrischen Geräts so ausgebildet und angetrieben bzw. angesteuert wird, dass die elektrische Kopplungseinheit eine Schutzkappe der Fahrzeug-Kopplungseinheit wegschiebt, besonders bevorzugt sind die beiden Kopplungseinheiten dabei als koaxialer Stecker und Steckdose ausgebildet.

Die Erfindung betrifft außerdem eine Anordnung, umfassend das elektrische Gerät wobei das elektrische Gerät in den Untergrund und/oder Boden eingelassen ist, insbesondere teilweise oder bündig mit der Oberfläche des Untergrunds und/oder Bodens. Der Untergrund und/oder Boden ist dabei zweckmäßigerweise Teil einer Garage oder eines Carports bzw. einer Unterstellmöglichkeit oder eines Stellplatzes des Elektrofahrzeugs.

Darüber hinaus betrifft die Erfindung außerdem die Verwendung der Anordnung nach und/oder des elektrischen Gerätes zum Laden eines Elektrofahrzeugs in einer Garage oder in einem Carport bzw. einer Unterstellmöglichkeit oder an/auf einem Stellplatz des Elektrofahrzeugs.

Es zeigen in schematischer Darstellung
Fig. 1 drei beispielhafte Positionen des elektrischen Geräts bzw. der Fahrzeug-Koppelungseinheit
Fig. 2 und 3 jeweils ein Ausführungsbeispiel eines elektrischen Geräts, und
Fig. 4 Ausführungsbeispiele von Einzelkomponenten des elektrischen Geräts.

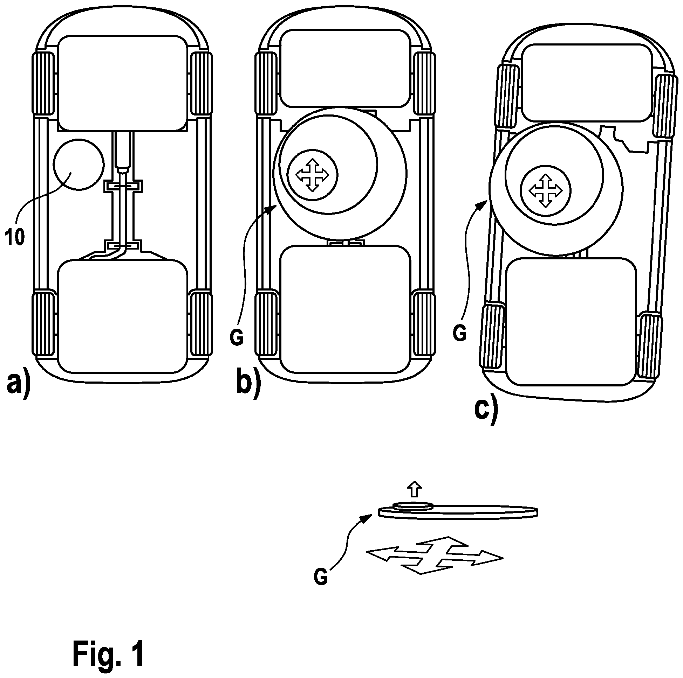

Fig. 1 veranschaulicht beispielhaft die Anordnung einer Fahrzeug-Kopplungseinheit 10 an der Unterseite eines Kraftfahrzeugs, siehe Fig. 1a), sowie in zwei weiteren Darstellungen b), c) die relative Positionierung des elektrischen Geräts G hierzu, wobei in Fig. 1. c) das Fahrzeug schräg ausgerichtet parkt und dies durch das elektrische Gerät G ausgeglichen wird.

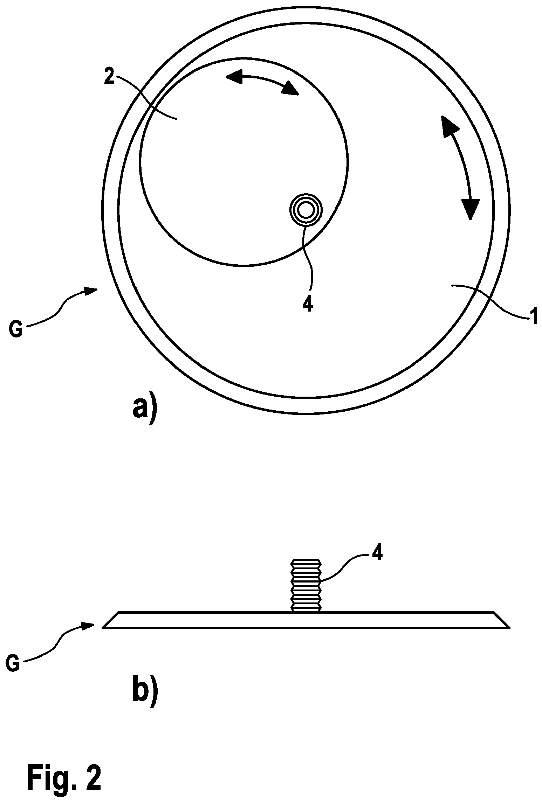

Anhand der Fig. 2 a) ist ein Ausführungsbeispiel des elektrisches Geräts G veranschaulicht. Das Gerät G weist dabei einen ersten 1 und einen zweiten 2, jeweils scheibenförmig ausgebildeten, Körper auf, welche im Wesentlichen parallel zu einem Untergrund ausgerichtet sind. Der erste Körper 1 ist dabei drehbar gelagert ist und wird rotatorisch angetrieben, wobei der zweiter Körper 2 exzentrisch mit dem ersten Körper 1 verbunden ist und relativ zum ersten Körper 1 drehbar gelagert ist und rotatorisch angetrieben wird, wobei mit dem zweiten Körper 2 eine Ladeeinheit 4 verbunden ist, welche senkrecht zur Grundfläche des ersten 1 und zweiten 2 Körpers auslenkbar ausgebildet ist, wie anhand Fig. 2 b) veranschaulicht.

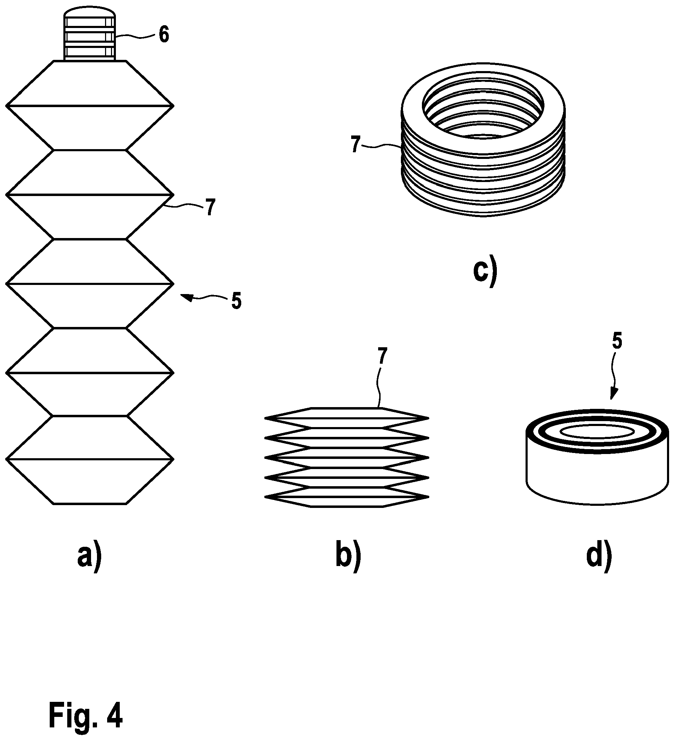

Alternativ ist der Stecker 6 der Ladeeinheit 4 koaxial ausgebildet, wie beispielsweise anhand der Fig. 4 d) dargestellt. Dabei sind zwei, drei oder mehr Kontaktringe radial nebeneinander/ ineinander angeordnet oder alternativ, wie anhand der Fig. 4 a) veranschaulicht weist der Stecker 6 mehrere Kontaktringe übereinander angeordnet auf, insbesondere 2 oder 3 oder mehr Kontaktringe. Alternativ vorzugsweise weist der Stecker 6 Kombinationen von Kontaktringen auf, welche radial nebeneinander und gleichzeitig übereinander bzw. axial angeordnet sind.

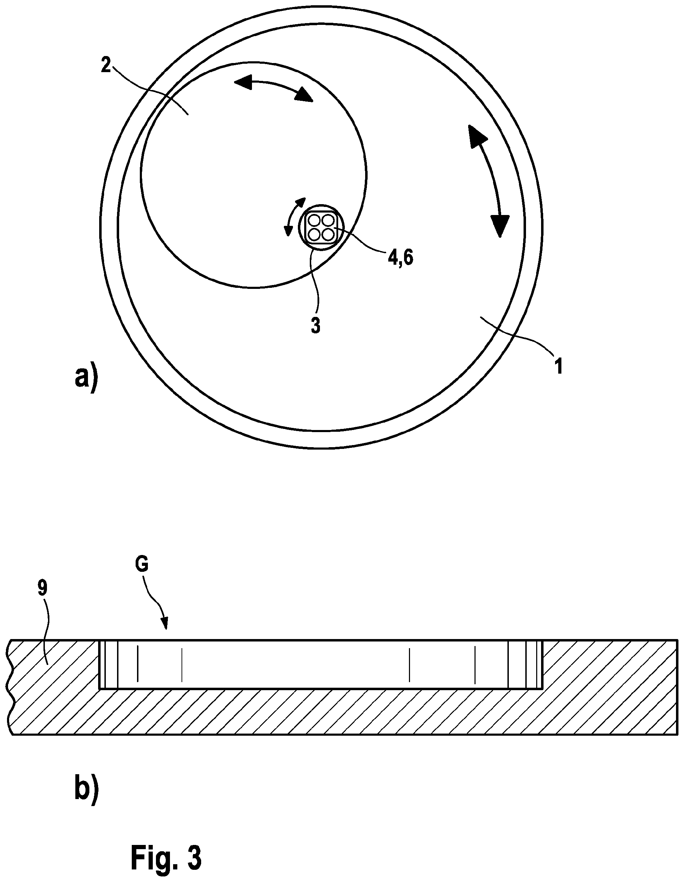

Fig. 3 a) zeigt ein alternatives Ausführungsbeispiel des elektrischen Geräts, welches ebenfalls den ersten 1 und einen zweiten 2, jeweils scheibenförmig ausgebildeten, Körper aufweist, welche jeweils drehbar gelagert ist und wird rotatorisch angetrieben sind, wobei der zweiter Körper 2 exzentrisch mit dem ersten Körper 1 verbunden ist. Dabei weist das elektrische Gerät in Fig. 3 a) zusätzlich einen dritten 3, scheibenförmig ausgebildeten, Körper auf, welcher exzentrisch mit dem zweiten Körper 2 verbunden ist und relativ zum zweiten Körper 2 drehbar gelagert ist und rotatorisch angetrieben wird, wobei die Ladeeinheit 4 mit dem dritten Körper 3 zentrisch verbunden ist. Die Ladeeinheit umfass beispielgemäß einen Stecker 6.

Anhand Fig 3 b) ist veranschaulicht, wie das beispielgemäße elektrischen Gerät G in den Untergrund 9, bündig mit der Oberfläche des Untergrunds 9 eingelassen ist.

Fig. 4 a) zeigt eine beispielhafte elektrische Kopplungseinheit, aufweisend Balg 7 sowie konzentrischen Stecker 6. Anhand der Fig. 4 b) und c) sind beispielhafte Bälge 7 veranschaulicht. Fig. 4 d) zeigt beispielhaft eine alternative, elektrische Kopplungseinheit, ohne Balg, bei welcher der Stecker beispielhaft zwei Kontaktringe radial nebeneinander bzw. koaxial angeordnet aufweist, und eine mittlere Kontaktfläche. Es sind in nicht dargestellten Beispielen mehr als zwei oder drei oder vier oder fünf Kontaktringe, insbesondere eine einstellige Anzahl an Kontaktringen, radial nebeneinander bzw. koaxial zueinander im Stecker angeordnet. Beispielhaft sind mittels fünf Kontaktringen insbesondere drei Phasen, ein Schutzkontakt und ein Kontakt zur Steuersignalübertragung mit dem Gegenstück des Steckers verbindbar und der Stecker weist entsprechend fünf Kontaktringe koaxial und/oder übereinander auf.

### Bezugszeichen

- 1: erster scheibenförmiger Körper
- 2: zweiter scheibenförmiger Körper
- 3: dritter scheibenförmiger Körper
- 4: Ladeeinheit
- 5: elektrische oder induktive Kopplungseinheit
- 6: Stecker
- 7: Balg
- 8: Teleskop
- 9: Untergrund/ Boden
- 10: Fahrzeug-Koppelungseinheit

- G: elektrisches Gerät

## Patentansprüche

1. Elektrisches Gerät (G) zum Laden von Elektrofahrzeugen, wobei das Gerät wenigstens einen ersten (1) und einen zweiten (2), jeweils im Wesentlichen scheibenförmig ausgebildeten, Körper aufweist, insbesondere welche im Wesentlichen parallel zu einem Untergrund (9) ausgerichtet sind, wobei der erste Körper (1) drehbar gelagert ist und rotatorisch angetrieben wird/ antreibbar ist, **dadurch gekennzeichnet, dass**
der zweiter Körper (2) exzentrisch mit dem ersten Körper verbunden ist und relativ zum ersten Körper (1) drehbar gelagert ist und rotatorisch angetrieben wird/ antreibbar ist, wobei mit dem zweiten Körper eine Ladeeinheit (4) verbunden ist, welche im Wesentlichen senkrecht zur Grundfläche des ersten (1) und zweiten (2) Körpers auslenkbar ausgebildet ist und insbesondere eine elektrische oder induktive Kopplungseinheit (5) aufweist.

2. Elektrisches Gerät nach Anspruch 1, **dadurch gekennzeichnet, dass** die zweite Scheibe (2) gegenüber der ersten Scheibe (1) zumindest eine umlaufend ausgebildete Dichtung und/oder Dichtlippe aufweist.

3. Elektrisches Gerät nach Anspruch 1 oder 2, **dadurch gekennzeichnet, dass** die Kopplungseinheit (5) als elektrisch kontaktierbarer Stecker oder Steckdose ausgebildet ist, insbesondere als koaxialer Stecker (6) oder Steckdose.

4. Elektrisches Gerät nach mindestens einem der vorhergehenden Ansprüche, **dadurch gekennzeichnet, dass** das elektrische Gerät (G) eine Sensoreinheit aufweist, welche senkrecht oder schräg zur Grundfläche des ersten (1) und zweiten (2) Körpers, insbesondere ausgehend vom Untergrund (9), im Wesentlichen nach oben gerichtet ist und eine elektrische oder induktive Fahrzeug-Koppelungseinheit, insbesondere einen Stecker oder eine Steckdose, eines Elektrofahrzeugs erfassen kann, wonach in der elektronischen Kontrolleinheit ECU ein erster Drehwinkel des ersten Körpers (1) und ein zweiter Drehwinkel des zweiten Körpers (2) berechnet wird, damit die Kopplungseinheit (5) der Ladeeinheit im Wesentlichen unter der Fahrzeug-Koppelungseinheit (10), insbesondere fluchtend, ausgerichtet wird, wonach die Ladeeinheit angetrieben von dem Elektromotor oder einem weiteren Elektromotor oder einer pneumatischen oder hydraulischen Antriebseinheit ausgelenkt wird und die elektrische oder induktive Kopplungseinheit (5) der Ladeeinheit in die Fahrzeug-Kopplungseinheit (10), insbesondere ausgebildet als Stecker oder Steckdose, eingesteckt und/oder eingepasst wird oder in einem definierten Abstand positioniert wird.

5. Elektrisches Gerät nach mindestens einem der vorhergehenden Ansprüche, **dadurch gekennzeichnet, dass** das elektrische Gerät (G) einen dritten (3), im Wesentlichen scheibenförmig ausgebildeten, Körper aufweist, welcher exzentrisch mit dem zweiten Körper (2) verbunden ist und relativ zum zweiten Körper drehbar gelagert ist und rotatorisch angetrieben wird/ antreibbar ist, wobei die Ladeeinheit (4) mit dem dritten Körper (3) anstatt dem zweiten Körper (2) verbunden ist.

6. Elektrisches Gerät nach mindestens einem der vorhergehenden Ansprüche, **dadurch gekennzeichnet, dass** die Ladeeinheit (4) einen Balg (7) und/oder ein Teleskop (8) aufweist.

7. Anordnung, umfassend ein elektrisches Gerät nach mindestens einem der vorhergehenden Ansprüche, **dadurch gekennzeichnet, dass** das elektrische Gerät (G) in den Untergrund und/oder Boden (9) eingelassen ist, insbesondere teilweise oder bündig mit der Oberfläche des Untergrunds und/oder Bodens (9).

8. Verwendung der Anordnung nach Anspruch 7 und/oder des elektrischen Gerätes (G) nach mindestens einem der Ansprüche 1 bis 6, zum Laden eines Elektrofahrzeugs in einer Garage oder in einem Carport oder an/auf einem Stellplatz des Elektrofahrzeugs.
